# EUROPÄISCHE PATENTSCHRIFT

(11) **EP 1 601 741 B1**
(45) Veröffentlichungstag und Bekanntmachung des Hinweises auf die Patenterteilung: **16.04.2008**
(21) Anmeldenummer: 04711357.6
(22) Anmeldetag: 16.02.2004
(51) Int. Cl.: C09K 11/08, D02G 3/00

(54) **TEXTILE FLÄCHENSTRUKTUR AUS EINER ANORDNUNG EINER VIELZAHL VON LEITFÄHIGEN ODER LEITFÄHIGE EIGENSCHAFTEN AUFWEISENDEN FÄDEN SOWIE VERFAHREN ZU DEREN HERSTELLUNG**
TEXTILE SURFACE STRUCTURE COMPRISING AN ARRANGEMENT OF A PLURALITY OF CONDUCTIVE THREADS OR THREADS EXHIBITING CONDUCTIVE PROPERTIES AND METHOD FOR THE PRODUCTION THEREOF
STRUCTURE TEXTILE PLANE CONSTITUEE PAR LA DISPOSITION D'UNE PLURALITE DE FILS CONDUCTEURS OU DOTES DE PROPRIETES CONDUCTRICES ET PROCEDE DE REALISATION ASSOCIE

(30) Priorität: 18.02.2003 DE 10306769; 24.07.2003 DE 10333583
(43) Veröffentlichungstag der Anmeldung: 07.12.2005
(73) Patentinhaber: Textilforschungsinstitut Thüringer-Vogtland e.V., 07973 Greiz (DE); ITP GmbH Gesellschaft Für Intelligente Textile Produkte, 09117 Chemnitz (DE)
(72) Erfinder: NEUDECK, Andreas, 08468 Reichenbach (DE); MÜLLER, Hardy, 08269 Hammerbrücke (DE); SCHEIBNER, Wolfgang, 08539 Schönberg (DE); RICHTER, Klaus, 99425 Weinar (DE); LENK, Stephan, 99423 Weimar (DE)
(74) Vertreter: Kruspig, Volkmar
(86) Internationale Anmeldenummer: PCT/EP2004/001429
(87) Internationale Veröffentlichungsnummer: WO 2004/074401

(56) Entgegenhaltungen:
- DE-A- 19 934 436
- US-A- 5 674 437
- US-A- 5 962 967
- US-A1- 2002 039 666

## Beschreibung

Die Erfindung betrifft eine textile Flächenstruktur aus einer Anordnung einer Vielzahl von leitfähigen oder leitfähige Eigenschaften aufweisenden Schussfäden, wobei zwischen den leitfähigen Fäden Isolationsabschnitte bestehen oder isolierende Fäden in die Struktur eingebracht sind, weiterhin die Struktur ein anorganisches elektrolumineszentes Material aufweist sowie elektrische Anschlußelemente vorgesehen sind, gemäß Oberbegriff des Patentanspruchs 1, sowie ein Verfahren zur Herstellung einer derartigen textilen Flächenstruktur nach den Merkmalen des Patentanspruchs 17.

Elektrolumineszente Anordnungen und deren Verwendung als Lichtquelle gehören z.B. mit Blick auf die EP 1 146 778 A2 zum Stand der Technik. Bei derartigen Anordnungen ist eine Elektrodeneinrichtung vorhanden und es sind dielektrische sowie elektrolumineszente Schichten ausgebildet. Eine äußere im wesentlichen flexible Schicht bildet eine Isolation und besteht aus einem transparenten Material. Durch die Anordnung einer Heizeinrichtung besteht die Möglichkeit, die Eigenschaften der Struktur an unterschiedliche Temperaturbedingungen anzupassen, um deren Funktionsfähigkeit bzw. Lichtausbeute zu erhalten oder zu erhöhen.

Ebenfalls zum Stand der Technik gehören elektrolumineszierende Filamente in Form einer Faser, welche von einer elektrisch isolierenden, dielektrischen Schicht umgeben sind und die weiterhin eine Schicht aufweisen, die aus einem Material besteht, welches elektrolumineszentes Pulver mit einem Bindemittel umfaßt. Die Lichtquelle der vorbeschriebenen Art ist darüber hinaus von einer transparenten Elektrode umgeben.

Die Flexibilität einer derartigen elektrolumineszenten Anordnung ist eingeschränkt und es ist zwingend die Ausführung der äußeren, umgebenden Elektrode aus einem transparenten Material erforderlich.

Die gattungsbildende US-PS 3,803,437 zeigt eine elektrolumineszente Displayanordnung, wobei diese aus einer Vielzahl von flexiblen Drähten oder Fäden besteht, die eine textile Flächenstruktur bilden.

Konkret ist eine Vielzahl von parallelen flexiblen, isolierenden Fasern mit einer Vielzahl von parallel angeordneten flexiblen Elektrodenfasern verwoben, wobei auf das so entstandene Fasergebilde eine Schicht aus einem elektrolumineszenten Material aufgebracht wird, und zwar derart, daß die gesamte Oberfläche bedeckt ist. In einer Ausführungsform sollen die als Elektroden wirkenden Fasern im wesentlichen rechtwinklig zu den isolierenden Fasern verlaufen.

Es hat sich jedoch gezeigt, daß bei einer solchen Ausführungsform einer textilen Flächenstruktur mit einer anorganischen Elektrolumineszenz-Schicht die Ausbeute an sichtbarem Licht außerordentlich gering ist. Dies deshalb, da das Beschichtungsmaterial in die Faserzwischenräume eindringt und hierdurch eine Dämpfung durch Abschattung eintritt. Bringt man nun im Sinne des Standes der Technik größere Mengen von elektrolumineszentem Material auf, dann verliert sich die gewünschte Flexibilität und die typische Haptik einer textilen Struktur.

Aus der US-A-5 674 437 ist ein Verfahren zum Herstellen von lumineszierenden Fasermaterialien vorbekannt. Konkret wird dort auf ein Extrudieren der Fasern hingewiesen, wobei im Extruder eine Mischung eines thermoplastischen Polymers mit Metalloxidpigmenten erfolgt, diese Mischung dann zum Schmelzen gebracht wird und im Nachgang der eigentliche Extrudiervorgang erfolgt.

Die US 2002/039666 A1 offenbart eine elektrolumineszierende Faser, die strukturfest sein soll. Um die Strukturfestigkeit zur gewährleisten, wird die vorgeformte Faser mit einer Substanz beschichtet, welche z. B. durch UV-Strahlung ausgehärtet werden kann, so dass sich eine gewünschte Formstabilität einstellt. Textile Eigenschaften sind mit einer solchen Faser oder Faserstruktur nicht erreichbar. Anorganische Leuchtstoffe, die mittels Festkörpersynthese hergestellt werden, sind z. B. aus der DE 199 34 436 A1 bekannt. Derartige Leuchtstoffe können zum Bereitstellen einer Druckfarbe dienen. Außerdem kann der Leuchtstoff als faserbildendes Material zum Herstellen lumineszierender Fasern eingesetzt werden.

Aus dem Vorgenannten ist es daher Aufgabe der Erfindung, eine weiterentwickelte textile Flächenstruktur aus einer Anordnung einer Vielzahl von leitfähigen oder leitfähige Eigenschaften aufweisenden Fäden anzugeben, wobei zwischen den leitfähigen Fäden Isolationsabschnitte bestehen oder isolierende Fäden in die Struktur eingebracht sind und wobei die Struktur ein anorganisches elektrolumineszentes Material aufweist. Die zu schaffende Struktur soll eine übliche textile Haptik aufweisen und über eine hohe Strahlungsenergie-Ausbeute verfügen und weiterhin üblichen Umwelteinflüssen gegenüber weitestgehend resistent sein. Ganz grundsätzlich besteht die Aufgabe der Erfindung darin, die textile Flächenstruktur derartig zu gestalten, daß selbige in eine textile Fläche integriert werden kann bzw. die mit üblichen textilen Fertigungsverfahren herstellbar ist.

Die Lösung der Aufgabe der Erfindung erfolgt mit einer textilen Flächenstruktur gemäß den Merkmalen des Patentanspruchs 1 sowie mit einem Verfahren zur Herstellung einer solchen Flächenstruktur nach der Definition gemäß Patentanspruch 17, wobei die Unteransprüche zweckmäßige Ausgestaltungen und Weiterbildungen darstellen.

Die Erfindung greift hierbei auf eine Elektrolumineszenz-Anordnung auf der Basis von durch Wechselspannungen zum Leuchten anregbaren elektrolumineszenten Materialien zurück, die in die textile Struktur eingebracht und über textile Elektroden und/oder in Textilien integrierte Elektroden angeregt werden. Erfindungsgemäß werden den elektrolumineszenten Materialien optische Aufheller und/oder lumineszierende und/oder phosphorisierende Substanzen oder aber auch Farbstoffe zur Modifizierung des austretenden Lichtes im sichtbaren Spektralbereich zugesetzt.

Es liegt im Sinne der Erfindung, daß mit der textilen Flächenstruktur Elektrolumineszenz-Lichtquellen großer Abmessungen und ansteuerbare Displays mit hohem Wirkungsgrad und einfacher Herstellung realisierbar sind. Die textile Flächenstruktur ist durch ihre technologisch einfache Handhabbarkeit in Gebrauchsgegenstände, z.B. textile Innendekorationsmaterialien, Arbeitsschutzbekleidungen, Werbebanner oder dergleichen integrierbar.

Erfindungsgemäß wird das elektrolumineszente Material in die Fadenstruktur-Zwischenräume eingebracht oder als beschichtete Fäden, angeordnet innerhalb der Struktur, ausgebildet. Weiterhin weist die Struktur eine, auch selektive, Beschichtung aus einem fluoreszierenden Stoff und/oder optischen Aufheller auf, wobei ergänzend die Gesamtanordnung mit einer transparenten, elastischen Deckschutzschicht versehen wird, der jedoch keine elektrischen Eigenschaften im Sinne einer Elektrode zukommen.

Die Deckschicht kann beispielsweise aus einem Polyurethan oder Acrylat bestehen oder ein solches Material aufweisen.

Die elektrischen Anschlußelemente der textilen Flächenstruktur sind unmittelbar auf Abschnitten dieser ausgebildet und können beispielsweise durch textile Techniken, wie Aufsticken, realisiert werden.

Als leitfähiges textiles Trägermaterial kommen metallisierte Fäden, Carbonfasern oder mit Indium-Zinnoxid beschichtete Fäden zur Anwendung.

Bei einer bevorzugten Ausführungsform sind jeweils zwei leitfähige Fäden der Struktur in einem geringen Abstand und voneinander isoliert gegenüberstehend ausgebildet, wobei im Zwischenraum elektrolumineszentes Material eingebracht ist oder im Zwischenraum ein weiterer Faden angeordnet wird, welcher eine elektrolumineszente Beschichtung oder derartige elektrolumineszente Eigenschaften aufweist.

Der Bereich des geringen Abstands liegt zwischen 100µm und 800µm, wobei der Durchmesser eines Einzelfadens im Bereich von vorzugsweise 20µm bis 50µm bis maximal 500µm liegt.

Der fluoreszierende, quasi als Lichtverstärker wirkende Stoff kann auch mit einem Farbstoff versehen sein, um eine verschiedenfarbige Leuchtquelle auszubilden.

Der fluoreszierende Stoff kann als individuelles Druckbild, auch partiell oder abschnittsweise, z.B. mittels Siebdruck oder mittels Ink-Jet aufgebracht werden, so daß ganz individuelle Bilder, Strukturen oder alphanumerische Zeichen, welche dann zum Leuchten gebracht werden, realisierbar sind.

Mittels eines Mehrfachdrucks besteht die Möglichkeit, in additiver oder subtraktiver Weise eine Farbmatrix auszubilden.

Auch liegt es im Sinne der Erfindung, den fluoreszierenden Stoff mittels eines Stiftes, z.B. eines Faserstifts, aufzubringen.

Biesen und Gimpen aus unterschiedlich beschichteten und modifizierten Fäden können Bestandteile der textilen Flächenstruktur sein.

Wie bereits angedeutet, kann die textile Flächenstruktur als Leuchtsicherheits-Textilie, textiles Leuchtmittel im Innendekorationsbereich oder als textiles, leuchtendes Werbebanner Verwendung finden.

Durch Führung und Anordnung der leitfähigen Fäden sowie der Anschlußelemente besteht die Möglichkeit, eine Displaymatrix mit einzeln oder in Gruppen ansteuerbaren Bildpunkten zu schaffen.

Bei dem Verfahren zur Herstellung einer textilen Flächenstruktur wird zunächst eine Vorstruktur mittels textiler Techniken erzeugt, welche isoliert benachbarte leitfähige Fäden aufweist. In einem nächsten Schritt wird elektrolumineszente Paste auf die Vorstruktur aufgebracht, z.B. aufgesprüht, welche vom Gewebe mindestens teilweise aufgesaugt und dadurch fixiert wird, ohne daß die elastischen Eigenschaften bzw. die textile Haptik der Vorstruktur eine Beeinträchtigung unterfährt.

Der fluoreszierende Stoff wird dann auf die vorbehandelte Struktur aufgetragen und es wird im Anschluß hieran die Deckschutzschicht aufgebracht.

In einer alternativen Ausführungsform kann die Vorstruktur Fäden enthalten, welche eine elektrolumineszente Beschichtung aufweisen.

Ebenso besteht die Möglichkeit, die leitfähigen Fäden der Vorstruktur galvanisch zu verstärken bzw. in diesem Sinne nachzubehandeln.

Der fluoreszierende Stoff kann in Form fluoreszierender Fäden oder derart beschichteter Fadenmaterialien in die Vorstruktur eingebracht weden, ohne den Grundgedanken der Erfindung zu verlassen.

In einer bevorzugten Ausführungsform der Erfindung wird die Vorstruktur als Doppel-Kamm-Gebilde realisiert, wobei abwechselnd leitfähige und nichtleitfähige Schußfäden eingetragen sind, wobei zum flächigen Kontaktieren außen leitfähige Kettfäden eingezogen werden und durch abwechselndes links- und rechtsseitiges Flotieren der leitfähigen Schußfäden und Entfernen der Flotationen sich die gewünschte kammartige Elektrodenstruktur, die in einfacher Weise kontaktiert werden kann, ausbildet.

Alles in allem gelingt es mit der Erfindung, eine Struktur anzugeben, deren Flexibilität und mechanische Belastbarkeit derjenigen von Folien überlegen ist. Weiterhin bleiben die Eigenschaften des textilen Materials, wie Atmungsaktivität, Luftdurchlässigkeit und so weiter weitestgehend erhalten, was bei Folien von vornherein nicht gegeben ist.

Die derart geschaffene Elektrolumineszenz-Lichtquelle stellt also eine textile Fläche dar, die als eigenständiges Material oder auf Trägertextilien aufgebracht für flexible Lichtquellen eingesetzt werden kann. Im Falle eines Transports läßt sich die flexible Lichtquelle auf kleinstem Raum verstauen. Die derart geschaffene Lichtquelle kann flexibel in der Kleidung als Sicherheitsbeleuchtung im Straßenverkehr, als modisches Accessoire oder in Berufsbekleidung, gekoppelt mit Sensoren als Warnanzeige und/oder als Display eingesetzt werden.

Die mit dem erfindungsgemäßen Verfahren hergestellte Flächenstruktur kann ohne Probleme direkt auf ein textiles Grundmaterial aufgenäht oder wie herkömmliche Stoffe konfektioniert werden. Das eigentliche textile Produkt, z.B. ein Bekleidungsstück, eine Fahrzeug-Innenauskleidung, eine technische Textilie und so weiter, bildet mit der Elektrolumineszenz-Lichtquelle eine Einheit. Die geschaffene Struktur ist mechanisch stärker belastbar und, wie bereits erwähnt, wesentlich flexibler als bisher bekannte Konstruktionen aus Folien oder sogenannter Electro Lumineszenz Fiber (ELF) mit Durchmessern im Bereich >2mm.

Die Erfindung soll nachstehend anhand eines Ausführungsbeispiels sowie unter Zuhilfenahme von Figuren näher erläutert werden.

Hierbei zeigen:
- Fig. 1: einen leitfähigen Faden, welcher mit einer dünnen Elektrolumineszenz-Schicht versehen ist;
- Fig. 2: ein Beispiel eines elektrolumineszierenden, textilen Flächengebildes;
- Fig. 3: eine Prinzipdarstellung einer textilen Flächenstruktur als Displaymatrix und
- Fig. 4: Abbildungen einer realisierten textilen Elektrolumineszenz-Struktur mit a) unter Tageslicht ohne angeschlossene Stromversorgung, b) unter Tageslicht mit angeschlossener Stromversorgung und c) im leicht abgedunkelten Raum ebenfalls mit angeschlossener Stromversorgung.

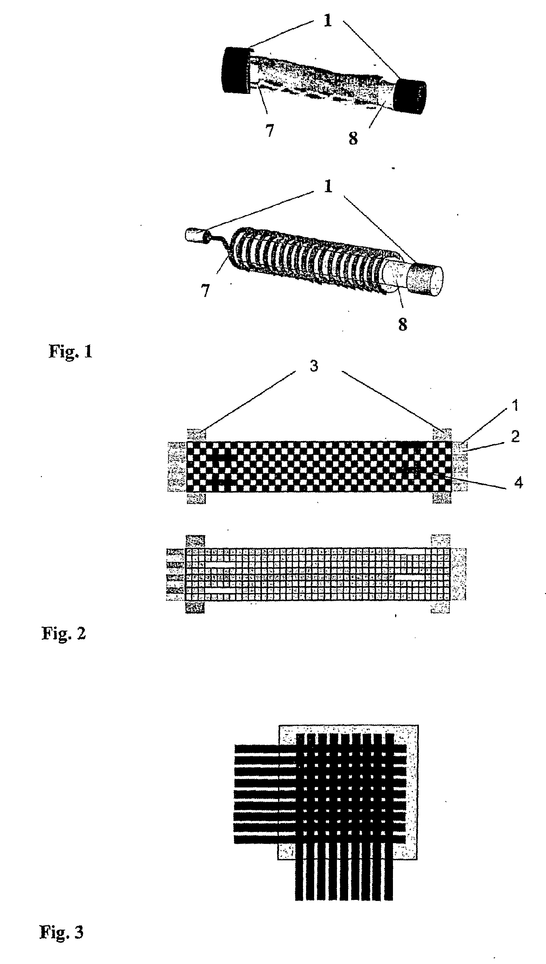

Gemäß Fig. 1 wird von einem leitfähigen textilen Faden im Durchmesser von idealerweise 20µm bis 50µm bei einem maximalen Durchmesser von 500µm ausgegangen, der zu Außenelektroden 1 führt. Die Beschichtung ist hier mit dem Bezugszeichen 7 und der Faden mit dem Bezugszeichen 8 gekennzeichnet.

Bei dem elektrolumineszierenden textilen Flächengebilde nach Fig. 2 wird von abwechselnd eingetragenen leitfähigen 1 und nichtleitfähigen 2 Schußfäden ausgegangen. Zum flächigen Kontaktieren sind außen leitfähige Kettfäden 3 eingezogen.

Durch abwechselndes links- und rechtsseitiges Flotieren im Flotierbereich 4 der leitfähigen Schußfäden und Entfernen der Flotationen wird die kammartige Elektrodenstruktur erhalten.

Die Prinzipdarstellung nach Fig. 3 macht deutlich, wie durch Herstellung eines mehrlagigen Gewebes, in dem teilweise elektrisch leitende Schuß- und Kettfäden verwendet werden, die durch die Gewebekonstruktion gegeneinander isoliert sind, Kreuzungspunkte von Schuß- und Kettfäden erhalten werden können, die einzeln ansteuerbar sind und quasi Leuchtpunkte erzeugen.

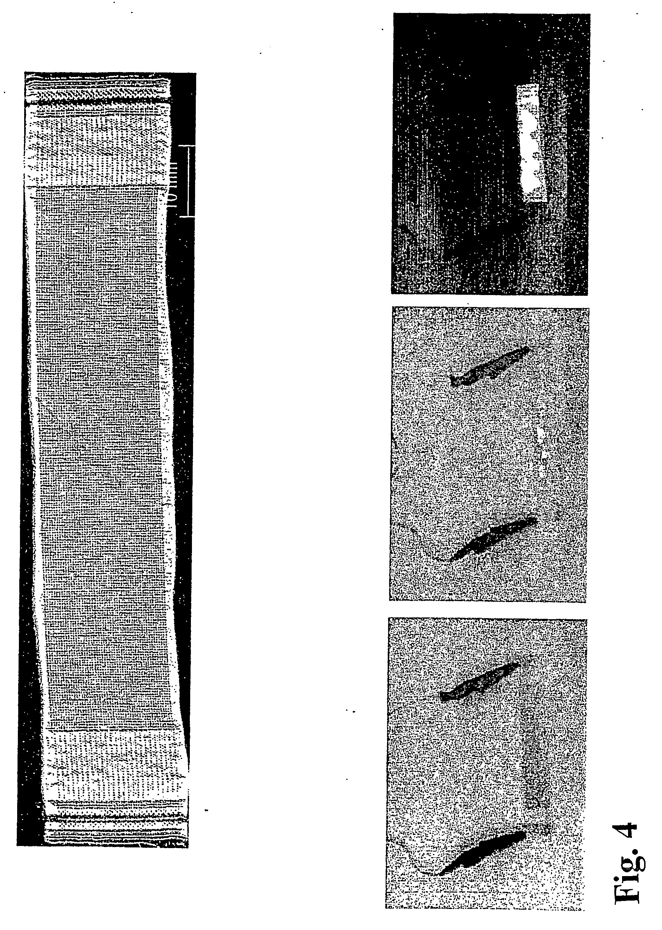

Bei der von der Anmelderin realisierten flächigen Elektrolumineszenz-Struktur nach Fig. 4 wird von einem Gewebe aus metallisierten Fäden ausgegangen, die mit einer Elektrolumineszenz-Paste beschichtet wurden.

Die textile Fläche wurde aus 22dTex Fadenmaterial erzeugt und ist außerordentlich flexibel. Die Elektrolumineszenz-Paste ist als sehr dünne Präparation aufgebracht, so daß auch nach der Versiegelung die textilen Eigenschaften erhalten bleiben. Die erkennbaren links- und rechtsseitigen Kupferfolien-Anschlüsse dienen nur der einfachen Handhabung bei den experimentellen Untersuchungen und sind vom Grundsatz her für den eigentlichen Betrieb der Struktur nicht nötig.

Es hat sich gezeigt, daß der alleinige Einsatz von Elektrolumineszenz-Pasten keine ausreichende Leuchtdichte liefert, da durch den Verzicht auf die im Stand der Technik üblichen optisch transparenten Elektrodenschichten recht große Lichtverluste auftreten. Wie die Fig. 4b) und 4c) deutlich machen, kann durch den Einsatz von fluoreszierenden Additiven, die hier in Form der Buchstabenfolge TITV aufgebracht wurden, die Lichtausbeute verstärkt werden, wobei Intensitäten erreichbar sind, die derjenigen entsprechen, wie sie bei bekannten Elektrolumineszenz-Folien auftreten.

Die die Gesamtanordnung abdeckende transparente, vorzugsweise elastische Deckschicht weist elektrisch isolierende Eigenschaften auf. Neben isolierenden Materialien wie Polyurethan oder Acrylat ist demnach auch ein Polyvinylchlorid (PVC) als Deckschichtmaterial denkbar.

Bei Untersuchungen der Anmelderin hat sich gezeigt, daß Strukturen zum Leuchten gebracht werden können, welche aus einem fadenartigen Material bestehen, das mit mikrogekapseltem, dotiertem Zinksulfid versehen ist. Bevorzugt bestehen die gemäß Ausführungsbeispiel zum Einsatz kommenden Gewebe und Fäden bzw. die dort vorgesehenen Elektroden aus galvanisch vergoldeten Polyamidfäden, welche vorab chemisch versilbert wurden. Vergoldete Fäden wirken sich hier positiv auf die Verlängerung der Lebenszeit so erhaltener Module aus.

Bisher realisierte leuchtende Gewebe besitzen eine Webdichte zwischen 60cm⁻¹ bis 70cm⁻¹, was einem Fadenabstand von etwa 0,0167cm bis 0,143cm entspricht. Es hat sich gezeigt, daß z. B. auch Doppelkammstrukturen mit einem Elektrodenabstand von bis zu 800µm erfolgreich angeregt und zum Leuchten gebracht werden können. In positiver Weise musste bei derartigen Abständen die Anregungswechselspannung nicht erhöht werden.

Bei einer weiteren Ausführungsform der Erfindung besteht die Möglichkeit, durch partielles Bedrucken, z.B. durch Siebdruck auf gewebten Doppelkammstrukturen mit elektrolumineszenter Paste verschiedenfarbig leuchtende Bilder zu erzeugen. Verwendet man hier unterschiedlich farbige Pasten, zum Beispiel blau, grün und orange, können durch einen Mehrfarbendruck farbig leuchtende Bilder auf den Gewebestrukturen erzeugt werden. Durch eine entsprechende Anregung entstehen im Auge des Betrachters additiv oder subtraktiv Mischfarben, die das Farbspektrum für weitere Applikationen erweitern.

Bei einigen Fällen hat sich gezeigt, daß sich die aufzubringende pastenartige elektrolumineszente Masse negativ auf die textile Verarbeitbarkeit der Fadenmaterialien auswirkt. Hier ist es von Vorteil, unbeschichtete Doppelfaden-Elektroden durch Versticken und/oder andere textile Technologien in eine textile Fläche einzubringen. Durch anschließendes Bedrucken der so erzeugten textilen Elektrodenflächen aus einzelnen Elektrodenfäden mit der Lumineszenzpaste können dann im Nachhinein die entsprechenden Leuchteffekte erzielt werden.

Weiterhin liegt es im Sinne der Erfindung, Elektrolumineszenz mit lumineszierenden Materialien zu kombinieren, um einerseits die Intensität des Lichtes erhöhen zu können sowie um andererseits auch die Farbe des emittierten Lichtes zu beeinflussen. Hierfür kommen gemäß weiterer Ausführungsform fluoreszierende Nano-Partikel zum Einsatz. Die Farbe des emittierten Fluoreszenzlichts hängt dabei von der Partikelgröße ab und kann eingestellt werden.

Von besonderem Vorteil ist es auch, den notwendigen Spannungswandler zum Betreiben der Anordnung, welcher eine Kleinspannung, z.B. aus einem Primärelement, in die notwendige Wechselspannung transformiert, direkt in das textile Material zu integrieren. Insbesondere ist hier von Vorteil, unmittelbar erforderlich werdende Induktivitäten, zum Beispiel für Transformatorspulen, in das Gewebe einzuwirken bzw. die Spulen selbst zu weben.

## Patentansprüche

1. Textile Flächenstruktur aus einer Anordnung einer Vielzahl von leitfähigen oder leitfähige Eigenschaften aufweisenden Schuss-Fäden, wobei zwischen den leitfähigen Fäden Isolationsabschnitte bestehen oder isolierende Fäden in die Struktur eingebracht sind, weiterhin die Struktur ein anorganisches elektrolumineszentes Material aufweist sowie elektrische Anschlusselemente vorgesehen sind,
**dadurch gekennzeichnet, dass**
das elektrolumineszente Material in die Strukturzwischenräume eingebracht oder als beschichtete Fäden, angeordnet innerhalb der textilen Struktur, ausgebildet ist,
weiterhin die textile Struktur eine, auch selektive, Beschichtung aus einem fluoreszierenden Stoff und/oder optischen Aufheller aufweist und wobei die Gesamtanordnung eine transparente; elastische Deckschutzschicht umfasst und die textilen Eigenschaften der Flächenstruktur erhalten bleiben.

2. Textile Flächenstruktur nach Anspruch 1,
**dadurch gekennzeichnet, daß**
die Deckschicht ein Polyurethan, Acrylat, Polyvinylchlorid oder ein ähnliches transparentes, elektrisch isolierendes Material aufweist.

3. Textile Flächenstruktur nach Anspruch 1 oder 2,
**dadurch gekennzeichnet, daß**
die elektrischen Anschlußelemente unmittelbar auf Abschnitten der Flächenstruktur ausgebildet sind.

4. Textile Flächenstruktur nach einem der vorangegangenen Ansprüche,
**dadurch gekennzeichnet, daß**
die elektrischen Anschlußelemente durch textile Techniken, wie Aufsticken, realisiert sind.

5. Textile Flächenstruktur nach einem der vorangegangenen Ansprüche,
**dadurch gekennzeichnet, daß**
diese in textile Produkte oder sonstige Gebrauchsgegenstände integriert ist.

6. Textile Flächenstruktur nach einem der vorangegangenen Ansprüche,
**dadurch gekennzeichnet, daß**
diese als leitfähiges textiles Trägermaterial metallisierte Fäden, Carbonfasern, Indium-Zinnoxid-beschichtete Fäden oder dergleichen aufweist.

7. Textile Flächenstruktur nach einem der vorangegangenen Ansprüche,
**dadurch gekennzeichnet, daß**
jeweils zwei leitfähige Fäden der Struktur in einem geringen Abstand und voneinander isoliert gegenüberstehen, wobei im Zwischenraum elektrolumineszentes Material eingebracht ist oder im Zwischenraum ein weiterer Faden befindlich ist, welcher eine elektrolumineszente Beschichtung oder derartige elektrolumineszente Eigenschaften aufweist.

8. Textile Flächenstruktur nach Anspruch 7,
**dadurch gekennzeichnet, daß**
diese als Doppelkammstruktur vorliegt, welche partiell mit elektrolumineszierendem Material bedruckt ist, wobei durch additive oder subtraktive Mischung mehrerer Grundfarben eine Vielfarbigkeit einstellbar ist.

9. Textile Flächenstruktur nach einem der vorangegangenen Ansprüche,
**dadurch gekennzeichnet, daß**
der Durchmesser der Einzelfäden im Bereich von vorzugsweise 20µm bis 50µm bis maximal 500µm liegt.

10. Textile Flächenstruktur nach einem der vorangegangenen Ansprüche,
**dadurch gekennzeichnet, daß**
der fluoreszierende Stoff eingefärbt ist oder daß fluoreszierende Nano-Partikel zur Strahlungsintensitätserhöhung beigegeben sind.

11. Textile Flächenstruktur nach einem der Ansprüche 1 bis 9,
**dadurch gekennzeichnet, daß**
der fluoreszierende Stoff als individuelles Druckbild partiell, vorzugsweise mittels Siebdruck oder mittels Ink-Jet aufgebracht ist.

12. Textile Flächenstruktur nach Anspruch 11,
**dadurch gekennzeichnet, daß**
mittels eines Mehrfachdrucks eine additive oder subtraktive Farbmatrix gebildet ist.

13. Textile Flächenstruktur nach einem der Ansprüche 1 bis 9,
**dadurch gekennzeichnet, daß**
der fluoreszierende Stoff mittels Stift aufgebracht ist.

14. Textile Flächenstruktur nach einem der vorangegangenen Ansprüche,
**dadurch gekennzeichnet, daß**
Biesen und Gimpen aus unterschiedlich beschichteten und modifizierten Fäden Bestandteile der Struktur sind.

15. Textile Flächenstruktur nach einem der vorangegangenen Ansprüche,
**dadurch gekennzeichnet, daß**
diese als Leuchtsicherheitstextilie, textiles Leuchtmittel im Innendekorationsbereich oder als textiles, leuchtendes Werbebanner oder dergleichen Verwendung findet.

16. Textile Flächenstruktur nach einem der vorangegangenen Ansprüche,
**dadurch gekennzeichnet, daß**
durch Führung und Anordnung der leitfähigen Fäden und der Anschlußelemente eine Displaymatrix mit einzeln oder in Gruppen ansteuerbaren Bildpunkten realisiert ist.

17. Verfahren zur Herstellung einer textilen Flächenstruktur nach einem der vorangegangenen Ansprüche,
**dadurch gekennzeichnet, daß**
- eine Vorstruktur mittels textiler Techniken erzeugt wird, welche isoliert benachbarte leitfähige Fäden aufweist,
- elektrolumineszente Paste auf die Vorstruktur aufgebracht wird, welche vom Gewebe mindestens teilweise aufgesogen und dadurch fixiert wird,
- der fluoreszierende Stoff auf die vorbehandelte Struktur aufgetragen und anschließend die Deckschicht aufgebracht wird.

18. Verfahren nach Anspruch 17,
**dadurch gekennzeichnet, daß**
die Vorstruktur Fäden enthält, welche eine elektrolumineszente Beschichtung aufweisen.

19. Verfahren nach Anspruch 17,
**dadurch gekennzeichnet, daß**
die leitfähigen Fäden der Vorstruktur galvanisch verstärkt und vorbehandelt werden.

20. Verfahren nach Anspruch 17,
**dadurch gekennzeichnet, daß**
der fluoreszierende Stoff in Form von fluoreszierenden Fäden oder derart beschichteten Fäden in die Vorstruktur eingebracht wird.

21. Verfahren nach einem der Ansprüche 17 bis 20,
**dadurch gekennzeichnet, daß**
ein Doppel-Kamm-Gebilde realisiert ist, wobei abwechselnd leitfähige und nichtleitfähige Schußfäden eingetragen werden, weiterhin zum flächigen Kontaktieren außen leitfähige Kettfäden eingezogen werden und durch abwechselndes links- und rechtsseitiges Flotieren der leitfähigen Schußfäden und Entfernen der Flotationen sich eine kammartige Elektrodenstruktur ausbildet, welche auch zum Kontaktieren von diskreten elektronischen Bauelementen verwendbar ist.

22. Verfahren nach einem der Ansprüche 17 bis 21,
**dadurch gekennzeichnet, daß**
die elektronische Einrichtung zum Betrieb der Leuchtstruktur in die textile Fläche integriert ist.

23. Verfahren nach Anspruch 22,
**dadurch gekennzeichnet, daß**
die elektronische Einrichtung einen Spannungswandler umfaßt, dessen Wandlerinduktivitäten in die textile Fläche eingewebt werden.

## Claims

1. A textile surface structure consisting of an arrangement of a plurality of conductive picks or picks comprising conductive properties, wherein insulation portions exist between the conductive threads or insulating threads are inserted into the structure, the structure further comprises an inorganic electroluminescent material, and electrical connecting elements are provided,
**characterised in that**
the electroluminescent material is inserted into the structure interstices or formed as coated threads which are arranged within the textile structure,
the textile structure further comprises a - also selective - coating of a fluorescent substance and/or optical brightening agents, and with the overall arrangement comprising a transparent elastic covering protective layer and the textile properties of the surface structure being maintained.

2. The textile surface structure according to Claim 1,
**characterised in that**
the covering layer comprises a polyurethane, an acrylate, a polyvinylchloride or a similar transparent, electrically insulating material.

3. The textile surface structure according to Claim 1 or 2,
**characterised in that**
the electrical connecting elements are formed directly on portions of the surface structure.

4. The textile surface structure according to one of the previous claims,
**characterised in that**
the electrical connecting elements are realised by textile techniques, such as embroidering.

5. The textile surface structure according to one of the previous claims,
**characterised in that**
it is integrated into textile products or other commodities.

6. The textile surface structure according to one of the previous claims,
**characterised in that**
it comprises as a conductive textile carrier material, metallized threads, carbon fibres, indium tin oxide-coated threads, or the like.

7. The textile surface structure according to one of the previous claims,
**characterised in that**
two conductive threads each of the structure are arranged opposite one another at a small distance and insulated against one another, with an electroluminescent material being inserted into the interstice, or another thread being disposed in the interstice, which comprises an electroluminescent coating or such electroluminescent properties.

8. The textile surface structure according to Claim 7,
**characterised in that**
it is made as a double-comb structure which is partially printed with electroluminescent material, with a polychromy being adjustable by an additive or subtractive mixing of several primary colours.

9. The textile surface structure according to one of the previous claims,
**characterised in that**
the diameters of the individual threads preferably range from preferably 20 µm to 50 µm up to a maximum of 500 µm.

10. The textile surface structure according to one of the previous claims,
**characterised in that**
the fluorescent substance is dyed or that fluorescent nanoparticles are added to increase the radiation intensity.

11. The textile surface structure according to one of Claims 1 to 9,
**characterised in that**
the fluorescent substance is partially applied as an individual printed image, preferably by means of screen-printing or ink jet printing.

12. The textile surface structure according to Claim 11,
**characterised in that**
an additive or subtractive colour matrix is formed by means of a multiple printing process.

13. The textile surface structure according to one of Claims 1 to 9,
**characterised in that**
the fluorescent substance is applied by means of a pen.

14. The textile surface structure according to one of the previous claims,
**characterised in that**
tucks and gimps of differently coated and modified threads constitute parts of the structure.

15. The textile surface structure according to one of the previous claims,
**characterised in that**
it will be employed as a luminous safety textile product, a textile luminous means in the field of interior decoration, or as a textile luminous advertising banner, or the like.

16. The textile surface structure according to one of the previous claims,
**characterised in that**
a display matrix with pixels which may be controlled individually or groupwise is realised by routing and arranging the conductive threads and the connecting elements.

17. A method for manufacturing a textile surface structure according to one of the previous claims,
**characterised in that**
- a prestructure is created by means of textile techniques, which comprises insulated, neighbouring, conductive threads,
- an electroluminescent paste is applied to the prestructure, which is at least partially absorbed by the fabric and thereby cured,
- the fluorescent substance is applied to the pre-treated structure, with the covering layer being subsequently applied.

18. The method according to Claim 17,
**characterised in that**
the prestructure includes threads which comprise an electroluminescent coating.

19. The method according to Claim 17,
**characterised in that**
the conductive threads of the prestructure are reinforced and pre-treated by electroplating.

20. The method according to Claim 17,
**characterised in that**
the fluorescent substance is inserted into the prestructure in the form of fluorescent threads or threads which have been coated accordingly.

21. The method according to one of Claims 17 to 20,
**characterised in that**
a double-comb fabric is realised by alternately introducing conductive and non-conductive picks, by further inserting conductive warp threads at the outside for surface contact-making, and by forming a comb-type electrode structure by an alternate left-hand sided and right-hand sided flotation of the conductive picks and removing of the flotations, which may also be used for contact-making with discrete electronic components.

22. The method according to one of Claims 17 to 21,
**characterised in that**
the electronic device is integrated in the textile surface for the operation of the luminous structure.

23. The method according to Claim 22,
**characterised in that**
the electronic device comprises a voltage converter whose converter inductors are woven into the textile surface.

## Revendications

1. Structure textile surfacique constituée par la disposition d'une pluralité de fils de trame conducteurs ou dotés de propriétés conductrices, dans laquelle des portions isolantes existent entre les fils conducteurs ou des fils isolants sont insérés dans la structure, la structure présente un matériau électroluminescent inorganique, et dans laquelle sont prévus des éléments de connexion électrique,
**caractérisée en ce que**
le matériau électroluminescent est inséré dans les intervalles de la structure ou est réalisé sous forme de fils revêtus agencés à l'intérieur de la structure textile,
la structure textile présente un revêtement, également sélectif, constitué par une substance fluorescente et/ou par un agent d'éclaircissement optique, l'agencement dans son ensemble présentant une couche de couverture protectrice élastique transparente et les propriétés textiles de la structure surfacique restant maintenues.

2. Structure textile surfacique selon la revendication 1,
**caractérisée en ce que**
la couche de couverture présente un polyuréthane, un acrylate, un chlorure de polyvinyle ou un matériau transparent similaire électriquement isolant.

3. Structure textile surfacique selon la revendication 1 ou 2,
**caractérisée en ce que**
les éléments de connexion électrique sont réalisés directement sur des portions de la structure surfacique.

4. Structure textile surfacique selon l'une des revendications précédentes,
**caractérisée en ce que**
les éléments de connexion électrique sont réalisés par des techniques textiles, telles que la broderie.

5. Structure textile surfacique selon l'une des revendications précédentes,
**caractérisée en ce que**
celle-ci est intégrée dans des produits textiles ou dans d'autres objets utilitaires.

6. Structure textile surfacique selon l'une des revendications précédentes,
**caractérisée en ce que**
celle-ci présente à titre de matériau porteur textile conducteur des fils métallisés, des fibres de carbone, des fils revêtus d'indium-oxyde d'étain ou similaires.

7. Structure textile surfacique selon l'une des revendications précédentes,
**caractérisée en ce que**
deux fils conducteurs respectifs de la structure se font face à une petite distance et en étant isolés l'un de l'autre, un matériau électroluminescent étant inséré dans l'intervalle ou un autre fil se situant dans l'intervalle, qui présente un revêtement électroluminescent ou de telles propriétés électroluminescentes.

8. Structure textile surfacique selon la revendication 7,
**caractérisée en ce que**
celle-ci se présente sous la forme d'une structure à peigne double qui est imprimée partiellement d'un matériau électroluminescent, un caractère polychrome pouvant être établi par mélange additif ou soustractif de plusieurs couleurs primaires.

9. Structure textile surfacique selon l'une des revendications précédentes,
**caractérisée en ce que**
le diamètre des fils individuels se situe dans la plage allant de préférence de 20 µm à 50 µm, au maximum jusqu'à 500 µm.

10. Structure textile surfacique selon l'une des revendications précédentes,
**caractérisée en ce que**
la substance fluorescente est colorée ou **en ce que** des nanoparticules fluorescentes sont ajoutées pour augmenter l'intensité de rayonnement.

11. Structure textile surfacique selon l'une des revendications 1 à 9,
**caractérisée en ce que**
la substance fluorescente est déposée partiellement sous forme d'image imprimée individuelle, de préférence par sérigraphie ou à jet d'ancre.

12. Structure textile surfacique selon la revendication 11,
**caractérisée en ce que**
une matrice de coloration additive ou soustractive est formée au moyen d'une impression multiple.

13. Structure textile surfacique selon l'une des revendications 1 à 9,
**caractérisée en ce que**
la substance fluorescente est déposée au crayon.

14. Structure textile surfacique selon l'une des revendications précédentes,
**caractérisée en ce que**
des nervures et des cordonnets constitués de fils revêtus et modifiés de différentes manières font partie de la structure.

15. Structure textile surfacique selon l'une des revendications précédentes,
**caractérisée en ce que**
celle-ci est utilisée comme textile de sécurité lumineux, agent lumineux textile pour le domaine de la décoration intérieure ou comme bandeau publicitaire lumineux textile ou similaires.

16. Structure textile surfacique selon l'une des revendications précédentes,
**caractérisée en ce que**
une matrice d'écran d'affichage comportant des points d'image à commander individuellement ou en groupes est réalisée par le tracé et l'agencement des fils conducteurs et des éléments de connexion.

17. Procédé de réalisation d'une structure textile surfacique selon l'une des revendications précédentes,
**caractérisée en ce que**
- on produit une structure préliminaire par des techniques textiles, qui présente des fils conducteurs voisins isolés,
- on applique une pâte électroluminescente sur la structure préliminaire, qui est au moins partiellement absorbée par le tissu et qui est ainsi fixée,
- on applique la substance fluorescente sur la structure prétraitée et ensuite on applique la couche de couverture.

18. Procédé selon la revendication 17,
**caractérisé en ce que**
la structure préliminaire comprend des fils qui présentent un revêtement électroluminescent.

19. Procédé selon la revendication 17,
**caractérisé en ce que**
les fils conducteurs de la structure préliminaire sont renforcés et prétraités par voie galvanique.

20. Procédé selon la revendication 17,
**caractérisé en ce que**
on insère dans la structure préliminaire la substance fluorescente sous forme de fils fluorescents ou de fils ainsi revêtus.

21. Procédé selon l'une des revendications 17 à 20,
**caractérisé en ce que**
on réalise un ensemble à peigne double dans lequel on insère en alternance des fils de trame conducteurs et des fils de trame non conducteurs, on insère en outre des fils de chaîne extérieurement conducteurs pour la mise en contact surfacique, et on réalise une structure d'électrode en peigne par flottation alternante côté gauche et côté droit des fils de trame conducteurs et par enlèvement des flottations, structure qui est utilisable également pour la mise en contact d'éléments structurels électroniques discrets.

22. Procédé selon l'une des revendications 17 à 21,
**caractérisé en ce que**
le dispositif électronique pour le fonctionnement de la structure lumineuse est intégré dans la surface textile.

23. Procédé selon la revendication 22,
**caractérisé en ce que**
le dispositif électronique comprend un transformateur de tension dont les inductances de transformation sont intégrées par tissage dans la surface textile.
